# EUROPEAN PATENT APPLICATION

(11) **EP 2 107 847 A1**
(43) Date of publication of application: **07.10.2009**
(21) Application number: 08006680.6
(22) Date of filing: 01.04.2008
(51) Int. Cl.: H04W 52/02, H04W 88/08

(54) **Method and device for data processing and communication system comprising such device**

(71) Applicant: Nokia Siemens Networks Oy, 02610 Espoo (FI)
(72) Inventor: Döttling, Martin, Dr., 85579 Neubiberg (DE); Färber, Michael, 82515 Wolfratshausen (DE); Lobinger, Andreas, 83714 Miesbach (DE); Michel, Jürgen, Dr., 81737 München (DE); Raaf, Bernhard, 82061 Neuried (DE); Viering, Ingo, Dr., 81539 München (DE)
(74) Representative: Krombach, Rainer

(57) **Abstract**

A method and a device are provided for data processing over a communication network comprising at least one base station, wherein a bandwidth of the base station is processed in order to modify a power efficiency, and wherein said base station maintains substantially the same area coverage. Furthermore, a communication system is suggested comprising said device.

## Description

The invention relates to a method and to a device for data processing over a communication network and to a communication system comprising such a device.

Radio access systems facilitate variable bandwidth support, e.g., via an Orthogonal Frequency-Division Multiplexing (OFDM), SC-FDMA (Single Carrier Frequency Division Multiplexing Access) or an OFDM Access (OFDMA) air interface concept. Current examples for utilizing such concepts are Long-Term Evolution (LTE) and Worldwide Interoperability for Microwave Access (WiMAX).

A base station (also referred to as base transceiver station (BTS) or NodeB) comprises at least one amplifier. Due to the transmission technology applied, such amplifier needs to meet linearity requirements which results in a minimum current (offset) fed to the amplifier's transistors to set its operating point for linear amplification purposes.

Regarding OFDM modulation, such offset is significant and it reduces the amplifier's efficiency and/or its achievable output power. A peak to average power ratio (PAPR) describes a linearity of a transmitter required to transmit signals with multi-code or multi-tone characteristic. Such PAPR further depends on the modulation schemes utilized. The aim is to generate a signal without significant distortion and hence to avoid degradation in the signal-to-interference-plus-noise ratio (SINR) required at the receiver. Therefore, the PAPR sets forth a linearity required by the power amplifier to achieve a good link performance.

However, even during periods of minor (or no) traffic, the power consumption of the amplifier remains significant. Hence, in low traffic scenarios, e.g., during night time, the power fed to the amplifier remains high, wherein the base station may only serve a minor amount of users.

On the other hand, simply reducing the power is not an option as the full area coverage of the base station has to be maintained even if only a few users are present in the cell.

Hence, the base station is maintained at its high power level resulting in high operational expenditure and a leading to a poor eco-balance.

The problem to be solved is to overcome the disadvantages as mentioned above and in particular to allow a reduced power consumption of a base station in order to reduce an operational expenditure.

This problem is solved according to the features of the independent claims. Further embodiments result from the depending claims.

In order to overcome this problem, a method is provided for data processing over a communication network comprising at least one base station,
- wherein a bandwidth of the base station is processed in order to modify a power efficiency,
- wherein said base station maintains substantially the same area coverage.

Hence the bandwidth is utilized or adjusted in order to allow for a modification of the power efficiency, wherein the area coverage of the base station remains substantially within the same range.

The approach provided in particular introduces a concept that utilizes a trade-off between an acceptable power consumption, a bandwidth needed and a power amplifier configuration. CDMA and OFDM based transmission concepts each requires a certain linearity of the power amplifier to avoid unwanted signal degradation in the used band by non-linear mixing of signal elements. Further, an out-of-band spectrum spread is also affected by the power amplifier's non-linearity.

In an embodiment, said communication network processes an OFDM or a CDMA scheme.

In another embodiment, the bandwidth is processed by modifying a guard band within the range of said bandwidth.

In a further embodiment, the bandwidth is processed to modify the power efficiency by adjusting an operating point of an amplifier.

In a next embodiment, the operating point of said amplifier is shifted to a more power efficient but less linear mode.

It is also an embodiment that the bandwidth processed is a bandwidth used for communication with at least one terminal.

It is noted that preferably the bandwidth of the communication system, i.e. the reserved bandwidth, remains unchanged, only a smaller portion of the system bandwidth is utilized.

Pursuant to another embodiment, a power-saving mode of a cell providing a first broadcast channel is initiated comprising the steps:
- supply a second broadcast channel;
- gradually degrade said first broadcast channel, in particular at least one parameter associated with said first broadcast channel;
- initiate handover for mobile terminals that are still associated with the first broadcast channel;
- turn off the first broadcast channel;
- switch amplifier to power-saving mode.

According to an embodiment, the cell returns to a normal power mode comprising the steps:
- switch amplifier to normal power mode;
- turn on the first broadcast channel;
- gradually degrade said second broadcast channel, in particular at least one parameter associated with said second broadcast channel;
- initiate handover for mobile terminals that are still associated with the second broadcast channel;
- turn off the second broadcast channel.

According to another embodiment, said power-saving mode and/or said normal mode is/are triggered by a clock and/or by a operation and maintenance facility.

In yet another embodiment, several different power-saving modes are provided.

Such several power-saving modes may be activated depending on an actual traffic situation and/or profile of a cell.

The problem stated above is also solved by a device comprising a processor unit and/or a hard-wired circuit and/or a logic circuit that is equipped and/or arranged such that the method as described herein is executable thereon.

According to an embodiment, the device is a communication device associated with or deployed with a base station.

According to another embodiment, said device is a component within a communication network.

The problem stated supra is further solved by a communication system comprising the device as described herein.

Embodiments of the invention are shown and illustrated in the following figures:
- Fig.1: shows a mapping diagram of signals in downlink direc- tion;
- Fig.2: shows a graph representing a bandwidth of a base sta- tion utilized for OFDMA or CDMA purposes and a re- duced bandwidth;
- Fig.3: shows a graph based on Fig.2 that results in a band- width occupying a larger range of frequencies;
- Fig.4: shows an allocation of a second PBCH within in the frequency domain indicated by two physical broadcast channels;
- Fig.5: shows an implementation of two different PBCHs in a time-division multiplexing (TDM) format;
- Fig.6: shows a block diagram depicting steps to be processed in order to switch a base station to a power-saving mode;
- Fig.7: shows a block diagram depicting steps to be processed in order to switch a base station from the power- saving mode to a full-power mode.

OFDM systems like LTE (the evolution of the 3G technology) facilitate various bandwidths. Independent on the chosen bandwidth, the sub-carrier spacing may be constant. The selected bandwidth itself does not have an impact on the spectral spread behavior, because the number of subcarriers is high, even for the smallest bandwidth that can be selected.

However, the OFDMA technology allocate chunks to resources, needed for the transmission of the user data, i.e., with an increasing load there are more active chunks leading to a 100% band occupation when 100% load is reached. Therefore, the system bandwidth defines the maximum cell load.

The system bandwidth, respectively the number of chunks and/or tones does not change the spectral properties as such. However, in a system that is designed for facilitating, e.g., a 10MHz bandwidth, a bandwidth reduction can be used for a relaxation of the spectral spread suppression requirement.

During a period without significant load, operation may be changed to a smaller bandwidth range and the power amplifier's operating point can hence be shifted to a more power efficient, but less linear mode.

The less linear mode of the power amplifier results in an increased spectral spread which is not detrimental as the network layout is designed for a system occupying a higher bandwidth than the actual bandwidth range utilized.

Thus, such reduction of the bandwidth in order to allow the power amplifier to be operated in a less linear mode can be efficiently considered as an increase of a guard band.

Therefore, the interference with adjacent bands is not increased due to the amplifier being operated a the less linear operating point. Actually, the co-channel scenario (between adjacent base stations) remains substantially unchanged (if adjacent cells maintain the same bandwidth ranges) or interference between adjacent cells may even be reduced (e.g., by neighboring cells switching to a low bandwidth power saving mode as well) due to the increase of the guard band range between the cells.

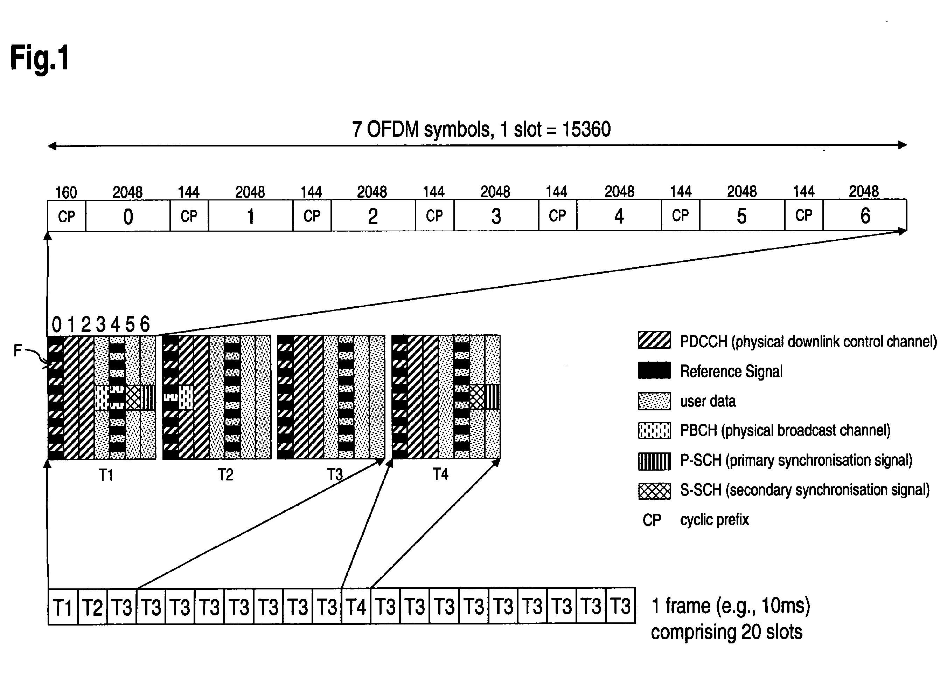

**Fig.1** shows a physical mapping of physical signals in downlink direction. 7 OFDM symbols 0 to 6 are transmitted in 1 slot, wherein each symbol is spaced from its adjacent symbol by a cyclic prefix. A reference signal is transmitted at OFDM symbols 0 and 4.

The OFDM symbols 0 to 6 are divided into several frequency slots F.

A primary synchronization signal P-SCH is conveyed on symbol 6 of slots 0 and 10 of each radio frame. It may occupy 72 sub-carriers that are centered around a DC sub-carrier.

A secondary synchronization signal S-SCH is transmitted via symbol 5 of slots 0 and 10 of each radio frame. It may occupy 72 sub-carriers that are centered around the DC sub-carrier.

A physical broadcast channel PBCH is transmitted on 72 sub-carriers centered around the DC sub-carrier.

The signals according to Fig.1 may be configured to be continuously provided. The mobile terminal (user equipment, UE) may thus rely on them and use, e.g., interpolation mechanisms processing all reference signals provided, even if the mobile terminal only receives on a single chunk (i.e. a resource block (RB) according to LTE nomenclature).

Accordingly, if some reference signals were not sent, there may be a risk that the mobile terminal does not work properly.

Next, a fully backwards compatible solution is described changing the nominal bandwidth of a cell, e.g., from 10MHz to 5MHz. For such purpose, a NodeB may emulate two different cells, a wide band cell and a narrow band cell, and it may switch UEs from one cell to another, depending on whether it wants to transmit at a low bandwidth or at a high bandwidth. In this approach, the NodeB (or base station or extended NodeB, eNodeB) may transmit (at least during a transition period) two different physical broadcast channel (PBCH) signals for the two bandwidth scenarios mentioned. This advantageously allows providing a fully backwards-compatible solution.

When a cell enters a state of minor traffic it may switch to a mode of reduced power consumption. Hence, the base station (NodeB) changes the system bandwidth. According to the example provided herewith, the base station during normal operation processes a bandwidth of 10MHz and during power-saving mode it switches to a system bandwidth of 5MHz. Of course, these are only an exemplary bandwidths. Other values as well as several intermediate stages of bandwidths to be selected may be applicable as well.

Prior to switching to the power-saving mode, an additional physical broadcast channel (PBCH) is established representing said exemplary (reduced) 5MHz bandwidth. The 10MHz PBCH is still active.

The additional PBCH can be provided as several chunks advantageously are in advance reserved by a scheduler especially for the PBCH of the power-saving mode. These reserved chunks can be used to allocate PBCH tones for defining the smaller bandwidth (5MHz in this example).

Regarding the terminology, the 10MHz cell refers to the system bandwidth utilized by the base station during normal operation, i.e. the full range of bandwidth is provided to the mobile terminals. Power-saving is off. On the other hand, the 5MHz cell refers to the power-saving scenario, wherein the base station utilizes only a portion of the system bandwidth of 10MHz. Such 5MHz may comprise a reduced number of tones or carriers and hence support a reduced number of mobile terminals. However, as the power-saving mode reflects a scenario of minor traffic, this 5MHz cell fits the requirement of allowing operation at a reduced power (to be fed to the amplifier) and still the 5MHz cell is capable of supplying substantially the same range as does the 10MHz cell.

Again, the numbers used herein (5MHz, 10MHz) are only exemplary. Other bandwidths or portions thereof may be applicable. It is also possible that several stages of power-saving apply, e.g., 10MHz, 7.5MHz, 5MHz, 2.5MHz.

Basically, the 10MHz cell refers to the cell operating in normal mode, wherein the 5MHz cell refers to the cell operating in power-saving mode.

Systems parameters used for 10MHz cell may then be gradually changed causing mobile terminals camping on the 10MHz cell to get re-allocated to the 5MHz cell. The PBCH for the 10MHz is switched off which results in further idle mode mobile terminals connecting to the 5MHz cell. Further active mobile terminals still active on the 10MHz cell are transferred to the 5MHz cell by means of forced handover.

Hence, the 10MHz cell is inactive and the 5MHz cell is active. This allows to modify the operating point of the power amplifier within the base station in a way that reduces its power consumption. The power amplifier's operating point can hence be shifted to a more power efficient, but less linear mode. Utilizing only a portion of its bandwidth, the capacity of the cell is reduced thereby reflecting a scenario of reduced traffic or load.

The less linear, but more power-efficient amplifier contributes to a reduced overall power consumption of the base station. The reduced spectrum is not detrimental to the performance in particular due to the virtually enhanced guard bands.

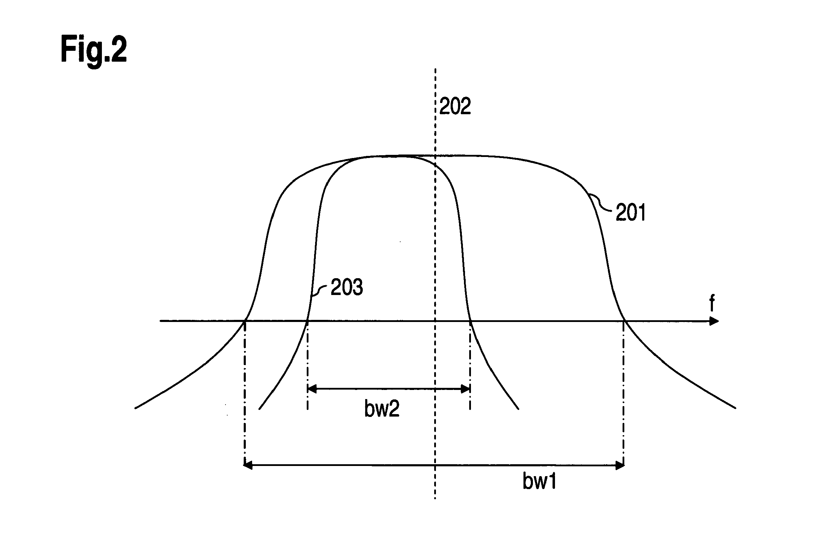

**Fig.2** shows a graph 201 representing a bandwidth bw1 of a base station utilized for OFDMA or CDMA purposes. In normal operation, a number of tones or carriers is provided within said bandwidth bw1.

In addition, a graph 203 depicts a reduced bandwidth bw2 within the range of the bandwidth bw1. According to the example provided, the bandwidth bw1 may amount to 10MHz and the bandwidth bw2 may amount to 5MHz. Operating at the bandwidth bw2, the base station may support a reduced number of mobile terminals via a reduces set of tones or carriers (compared to bandwidth bw1).

In both modes - indicated by the shape of graphs 201 and 203 - the amplifier of the base station is active around a linear operating point thereby consuming a significant amount of energy.

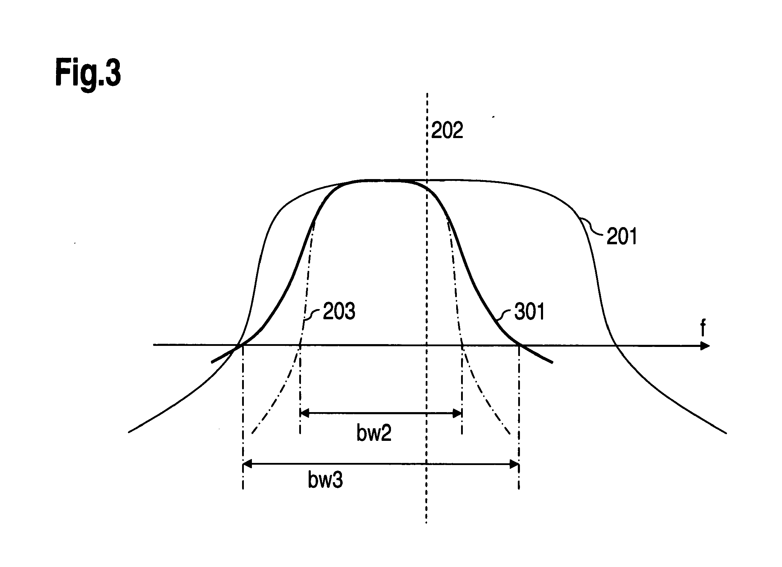

**Fig.3** shows a graph 301 within the diagram of Fig.2. Said graph 301 results in a bandwidth bw3 occupying a larger range of frequencies than the bandwidth bw2. The graph 301 results from the amplifier being switched to a less linear operating point thereby consuming less power at the price of less sharpness of the edges of graph 301 compared to graph 203. Although the frequency range utilized for operating the base station is based on the bandwidth bw2, the bandwidth bw3 is occupied within the maximum bandwidth range bw1 available. Hence, the amplifier is active in a power-saving mode, but the edges are less sharp leading to a reduced number of tones or carriers that can be used for conveying traffic to the mobile terminals within the cell.

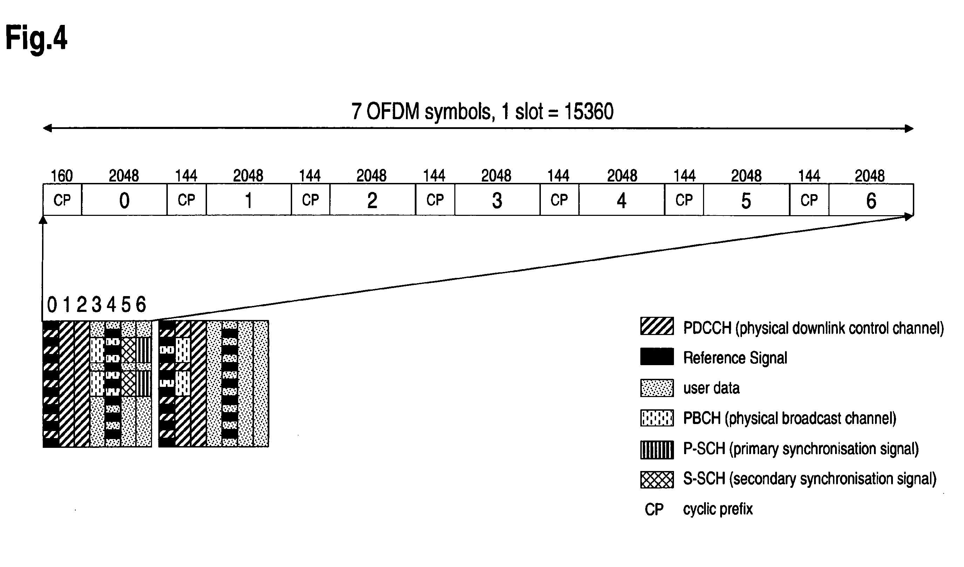

**Fig.4** shows an allocation of a second PBCH within in the frequency domain indicated by the two physical broadcast channels.

The two physical broadcast channels create two cells, a cell 1 and a cell 2, wherein both such cells are provided by the same base station. According to this example, cell 1 is the base station in normal operation and cell 2 corresponds to the base station in power-saving mode. From a mobile terminal's perspective, the different modes of the base station are perceived as different cells.

Advantageously, a scheduler for the cell may limit the use of resource blocks that are necessary for the second PBCH. Mobile terminals that are camping on cell 1 hence receive two PBCHs indicating two potential candidates as serving cells (i.e. cell 1 and cell 2). The base station in one scenario (enabling the power-saving to become active) wants the mobile terminals to become connected to cell 2.

A gradual modification of parameters of cell 1 may cause the mobile terminals to re-allocate to cell 2. Even switching off of the PBCH of cell 1 does no harm to idle mode mobile terminals still associated with cell 1 as these mobile terminals simply start camping on the next best serving cell, which in this case may be cell 2.

Mobile terminals that are in connected mode with cell 1 may have to be handed over to cell 2. This can be achieved by initiating a forced handover (utilizing such forced handover command). In addition, a gradual degradation of the cell 1 parameters may also lead to a handover request to cell 2 activated by the mobile terminal perceiving a fading connection to cell 1.

It is noted that PBCH of cell 2 may be somewhat off-centered compared to the PBCH of cell 1 (see left shift of graph 203 and 301 compared to graph 201 in Fig.3). Such offset can be in the range of the PBCH, e.g., some 1.25MHz. The offset of cell 2 is not detrimental in case the bandwidth of cell 2 is significantly less than 1.25MHz compared to the full bandwidth of cell 1 (see bw1 in Fig.2).

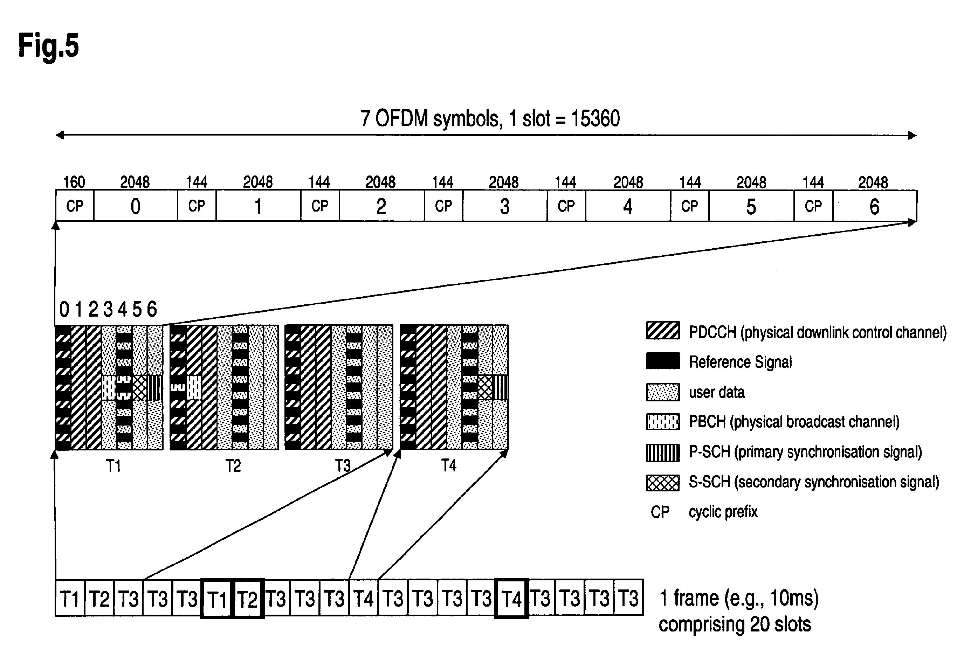

**Fig.5** shows an implementation in time-division multiplexing (TDM) format. The PBCH information of the cell 2 is mapped within the time frame, i.e. as slot T1 and slot T2. Also, the primary synchronization signal P-SCH and the secondary synchronization signal S-SCH are repeated (see slots T4).

The mobile terminal does not require any modification in relation to current standard releases. From the point of view of the mobile terminal, suddenly a new cell 2 appears with a slightly different timing compared to cell 1 that is already known to the mobile terminal. This, however, is feasible as in LTE there is no need for time synchronization. Hence, the mobile terminal is able to detect cell 2 and read the PBCH information, which may provide additional information regarding the position of the secondary PBCH provided with this time frame. The scheduler may assign some of the resource blocks to cell 1 and some other resource blocks to cell 2.

The advantage of such scheduling within the time domain is that the achievable extended guard bands are of the same size because the center frequency of the narrow band cell is identical to the wide band cell and not offset. Regarding Fig.3, the center frequency 202 thus not only applies to graph 201 (wide band cell), but also to graphs 203 and 301 (narrow band cell, which would be in the middle of the wide band cell).

Another realization may superimpose both PBCH signals of the frequency domain as well as on the time domain.

Hence, information regarding the PBCH of cell 2 is mapped within the time frame to the same position as the existing PBCH of cell 1. Also, the primary synchronization signal P-SCH as well as the secondary synchronization signal S-SCH regarding the PBCH information of cell 2 is repeated on an identical allocation. The terminal still does not necessarily need modifications in relation to the actual standard releases as long as it accepts different PBCH codings provide identical reference signals. From the mobile terminal's perspective, suddenly a new cell becomes apparent. The fact that both PBCH signals emerge from the same origin may be unusual, because both cells would look very much alike in terms of reception quality. The codes used by each cell may preferably differ regarding the content of the PBCH, but regarding the reference signals, the codes used are preferably identical.

Hence, the mobile terminal is able to detect the new cell and read the PBCH information. For enabling a transition from PBCH of cell 1 to PBCH of cell 2, the PBCH of cell 2 may be gradually increased, whereas the PBCH of cell 1 may be faded out. This will convey the mobile terminals to the cell 2.

The advantage of the scheduling of the code domain solution is that the achievable extended guard bands are of the same size because the center frequency of the narrow band cell is identical to center frequency of the wide band cell.

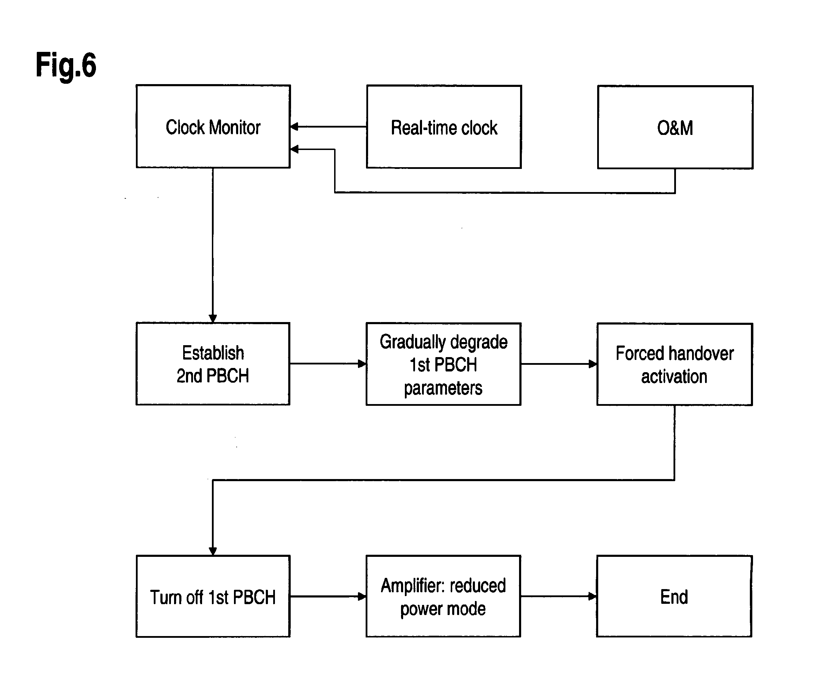

**Fig.6** shows a block diagram depicting steps to be processed in order to switch a base station to a power-saving mode.

A real time clock and/or a operation and maintenance (O&M) center or database may feed input to a clock monitor indicating that it is either time for a power-saving mode and/or that the traffic within the cell reaches a certain (lower) threshold to activate said power-saving mode. The clock monitor hence triggers the second PBCH to be established and to gradually dim the first PBCH parameters. This may indicate to mobile terminals of the cell that they lose their connection and thus they automatically connect to the next best cell (which is in particular the cell set up by said second PBCH). Mobile terminals that are still active can be forwarded by means of a forced handover. Next, the first PBCH is turned off and the amplifier of the base station enters low-power mode.

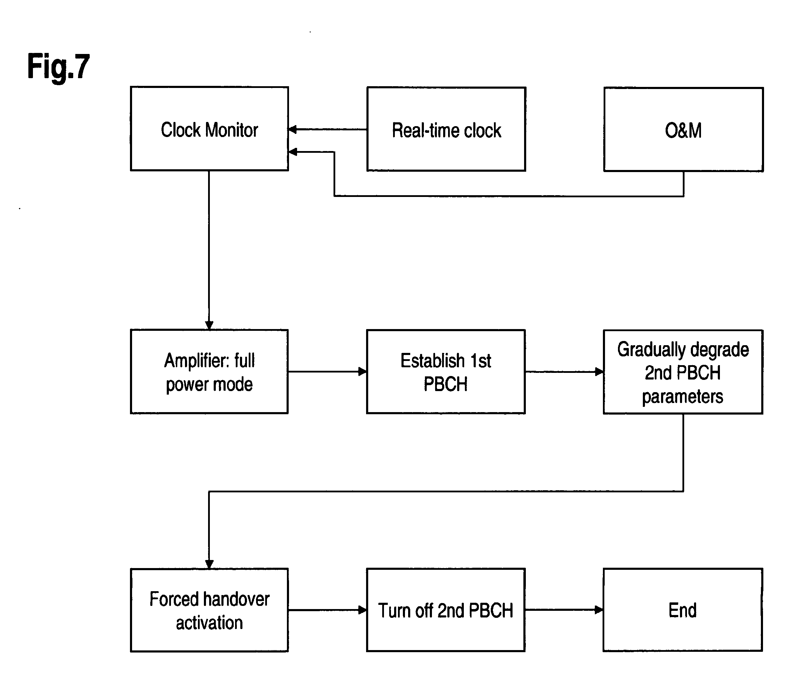

**Fig.7** shows a block diagram depicting steps to be processed in order to switch a base station from the power-saving mode to a full-power mode.

The real time clock and/or a operation and maintenance (O&M) center or database may feed input to a clock monitor indicating that it is either time for a full-power mode and/or that the traffic within the cell reaches a certain (upper) threshold to activate said full-power mode. The clock monitor hence triggers the amplifier of the base station to switch back to full-power mode. Next, the first PBCH is established and the second PBCH is gradually faded away. Mobile terminals that are still connected are forwarded by means of forced handover. The second PBCH is turned off. Now, the base station is in full-power mode (again).

## Claims

1. A method for data processing over a communication network comprising at least one base station,
- wherein a bandwidth of the base station is processed in order to modify a power efficiency,
- wherein said base station maintains substantially the same range or area coverage.

2. The method according to claim 1, wherein said communication network processes an OFDM or a CDMA scheme.

3. The method according to any of the preceding claims, wherein the bandwidth is processed by modifying a guard band within the range of said bandwidth.

4. The method according to any of the preceding claims, wherein the bandwidth is processed to modify the power efficiency by adjusting an operating point of an amplifier.

5. The method of claim 4, wherein the operating point of said amplifier is shifted to a more power efficient but less linear mode.

6. The method according to any of the preceding claims, wherein the bandwidth processed is a bandwidth used for communication with at least one terminal.

7. The method according to any of the preceding claims, wherein a power-saving mode of a cell providing a first broadcast channel is initiated comprising the steps:
- supply a second broadcast channel;
- gradually degrade said first broadcast channel, in particular at least one parameter associated with said first broadcast channel;
- initiate handover for mobile terminals that are still associated with the first broadcast channel;
- turn off the first broadcast channel;
- switch amplifier to power-saving mode.

8. The method according to claim 7, wherein the cell returns to a normal power mode comprising the steps:
- switch amplifier to normal power mode;
- turn on the first broadcast channel;
- gradually degrade said second broadcast channel, in particular at least one parameter associated with said second broadcast channel;
- initiate handover for mobile terminals that are still associated with the second broadcast channel;
- turn off the second broadcast channel.

9. The method according to any of claims 7 or 8, wherein said power-saving mode and/or said normal mode is/are triggered by a clock and/or by a operation and maintenance facility.

10. The method according to any of claims 7 to 9, wherein several different power-saving modes are provided.

11. A device comprising a processor unit and/or a hard-wired circuit and/or a logic circuit that is arranged such that the method according of any of the preceding claims is executable thereon.

12. The device according to claim 11, wherein said device is a communication device associated with or deployed with a base station.

13. The device according to claim 11, wherein said device is a component within a communication network.

14. Communication system comprising the device according to any of claims 11 to 13.
